# EUROPEAN PATENT APPLICATION

(11) **EP 1 124 344 A1**
(43) Date of publication of application: **16.08.2001**
(21) Application number: 00949893.2
(22) Date of filing: 26.07.2000
(51) Int. Cl.: H04J 11/00

(54) **OFDM COMMUNICATION DEVICE**

(30) Priority: 20.08.1999 JP 23390999
(71) Applicant: MATSUSHITA ELECTRIC INDUSTRIAL CO., LTD., Kadoma-shi, Osaka 571-8501 (JP)
(72) Inventor: SUDO, Hiroaki, Yokohama-shi, Kanagawa 224-0054 (JP)
(74) Representative: Grünecker, Kinkeldey, Stockmair & Schwanhäusser Anwaltssozietät
(86) International application number: PCT/JP00/04969
(87) International publication number: WO 01/15365

(57) **Abstract**

The OFDM communication apparatus according to the present invention includes a plurality of interleave sections capable of executing mutually different interleave processing on a transmission signal, a selection section for selecting the interleave section to execute interleave processing on the transmission signal from among the plurality of interleave sections and an OFDM section for performing OFDM processing on the transmission signal interleaved by the selected interleave section.

## Description

### Technical Field

The present invention relates to an OFDM (Orthogonal Frequency Division Multiplexing)-based communication apparatus carrying out retransmission control, and more particularly, to an OFDM-based communication apparatus using an interleave technology.

### Background Art

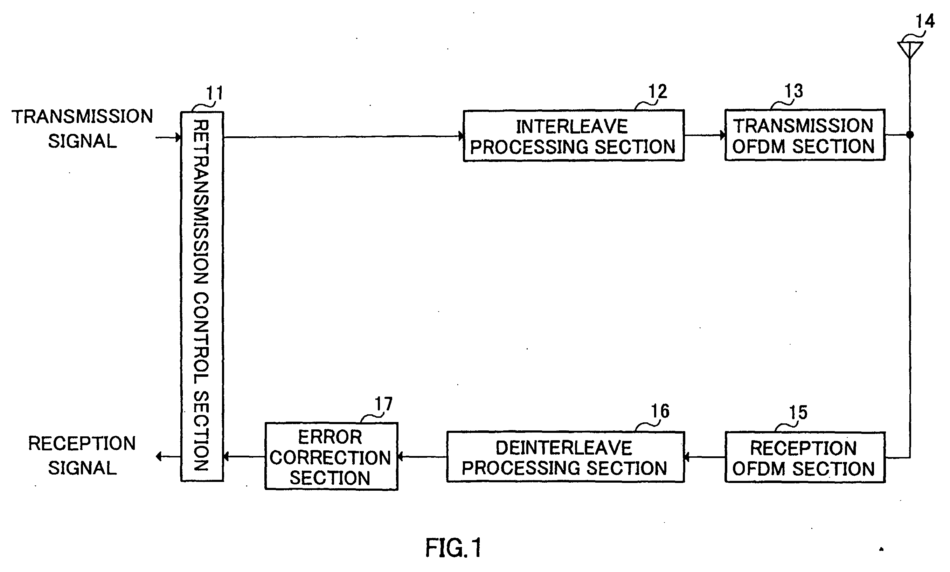

Retransmission control by a conventional OFDM communication apparatus using an interleave technology will be explained with reference to FIG.1. FIG.1 is a block diagram showing a conventional OFDM communication apparatus using an interleave technology. Retransmission control by the conventional OFDM communication apparatus using an interleave technology will be explained below, taking the following case where a first communication apparatus and a second communication apparatus both equipped with the OFDM communication apparatus shown in FIG.1 perform a radio communication as an example. What will be explained here is a case where the first communication apparatus sends a signal to the second communication apparatus and when the signal received by the second communication apparatus contains an error, the first communication apparatus retransmits (resends) this erroneous signal to the second communication apparatus.

First, in the transmission system of the first communication apparatus, a transmission signal is stored in retransmission control section 11. This transmission signal is a packet-unit signal. The stored transmission signal is sent by retransmission control section 11 to interleave processing section 12 according to a transmission timing.

In interleave processing section 12, the sequence of the signal sent by retransmission control section 11 is rearranged according to a specific rule. The signal with the rearranged sequence is subjected to predetermined transmission OFDM processing by transmission OFDM section 13 and placed in each subcarrier.

Here, the signal subjected to the predetermined transmission OFDM processing above refers to a signal assigned to each subcarrier at predetermined subcarrier intervals as a result of interleave processing by interleave processing section 12. That is, regarding the signal subjected to the predetermined transmission OFDM processing above, the first to third transmission signals input to interleave processing section 12 are placed at intervals of, for example, 4 subcarriers such as subcarrier 1, subcarrier 5 and subcarrier 9, and so on.

The signal subjected to the transmission OFDM processing is sent to the second communication apparatus via antenna 14. The signal sent from the first communication apparatus is received by the second communication apparatus through a transmission path.

The signal received through antenna 14 by the second communication apparatus is subjected to predetermined reception OFDM processing by reception OFDM section 15. The signal subjected to the predetermined reception OFDM processing above is subjected to deinterleave processing by deinterleave processing section 16. The signal subjected to deinterleave processing is subjected to error correction processing by error correction section 17. The error-corrected signal is output to retransmission control section 11.

When the error-corrected signal in retransmission control section 11 contains no error, this signal is output as a reception signal. On the contrary, when the error-corrected signal contains some error, this signal is stored in predetermined memory. Then, a signal including a packet requesting retransmission of this signal is processed by interleave processing section 12 and transmission OFDM section 13 and then sent to the first communication apparatus through antenna 14.

Then, in the first communication apparatus, retransmission control section 11 sends the packet requesting retransmission by the second communication apparatus to interleave processing section 12 according to a retransmission timing. This packet is subjected to the same processing as that described above and resent to the second communication apparatus through antenna 14.

As shown above, the signal containing an error detected by the second communication apparatus is resent by the first communication apparatus.

However, the conventional OFDM communication apparatus using an interleave technology has the following problems. That is, there are cases where signals of poor quality concentrated on a specific time period are input as the signals subjected to error correction processing in the second communication apparatus.

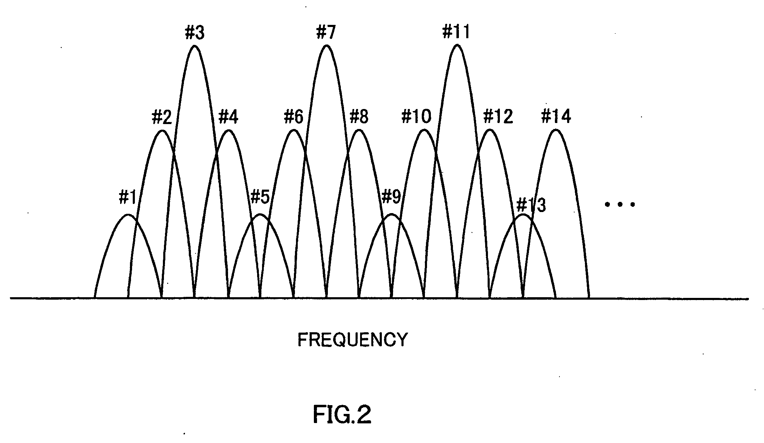

Here, FIG.2 is used as a reference to explain this situation more specifically. FIG.2 is a schematic diagram showing an example of placement of subcarriers of a signal received by the conventional OFDM communication apparatus using an interleave technology. Suppose interleave processing section 12 in the first communication apparatus performs the interleave processing as shown in the example above.

When the signal with subcarriers placed as shown in FIG.2 is received by the second communication apparatus, the signals output from deinterleave processing section 16 are signals picked up in time series from each subcarrier at intervals of 4 subcarriers such as subcarrier 1, subcarrier 5, subcarrier 9 and subcarrier 13, ··· . Here, as is apparent from FIG.2, signals placed in subcarrier 1, subcarrier 5, subcarrier 9 and subcarrier 13, ··· are of poor quality.

As a result, signals input to error correction section 17 are signals of poor quality concentrated on a specific time period, which causes the effect of error correction by error correction section 17 to reduce, making signals with errors often output to retransmission control section 11. This causes the first communication apparatus to resend the same packet.

Furthermore, when a variation of the channel (transmission path) state occurs slower than the time interval at which the first communication apparatus sends the same packet, the channel state when the same packet above is sent for the first time becomes virtually the same as the channel state when the above same packet is retransmitted (resent).

In this case, when the signal including the resent packet is received by the second communication apparatus, the state of subcarrier placement in this received signal has virtually the same state as that shown in FIG.2. Therefore, there is an extremely high probability that the packet resent from the first communication apparatus will also have errors in the second communication apparatus, and furthermore errors will occur consecutively in the above packets. This means that it will take a long time for the second communication apparatus to receive a specific packet sent by the first communication apparatus without errors.

### Disclosure of Invention

The inventor of the present invention has come up with the present invention noticing that subcarriers to which transmission signals subjected to OFDM transmission processing are assigned change depending on the interleave processing carried out before OFDM transmission processing, and therefore changing the interleave processing on the transmission signal will change the quality of each signal extracted through OFDM reception processing on the receiving side.

It is an object of the present invention to provide an OFDM communication apparatus capable of reducing the probability that errors will occur consecutively in a same packet. This object is attained by performing interleave processing on the transmission signal according to the number of retransmissions of the transmission signal.

### Brief Description of Drawings

FIG.1 is a block diagram showing a configuration of a conventional OFDM communication apparatus using an interleave technology;
FIG.2 is a schematic diagram showing an example of subcarrier placement in signals received by an OFDM apparatus using an interleave technology;

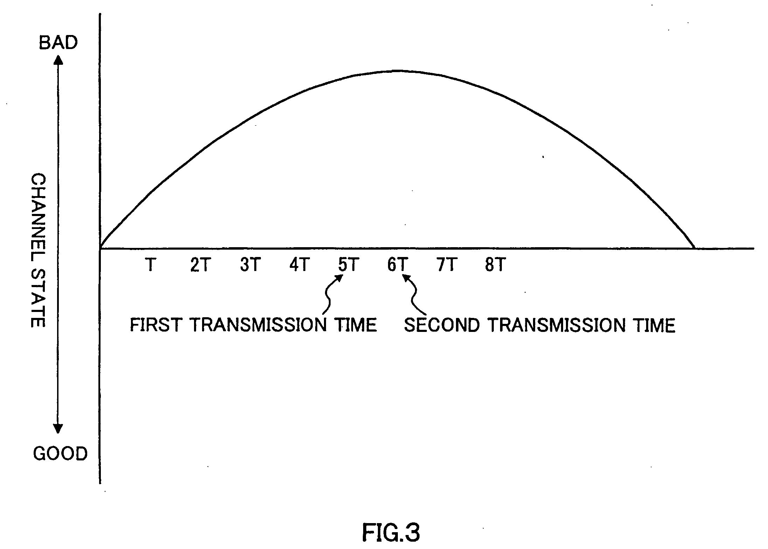

FIG.3 is a schematic diagram showing a state of a channel used by the conventional OFDM communication apparatus using an interleave technology; and
FIG.4 is a block diagram showing a configuration of an OFDM communication apparatus according to an embodiment of the present invention.

### Best Mode for Carrying out the Invention

With reference now to the attached drawings, a best mode for carrying out the present invention will be explained in detail below.

### (Embodiment)

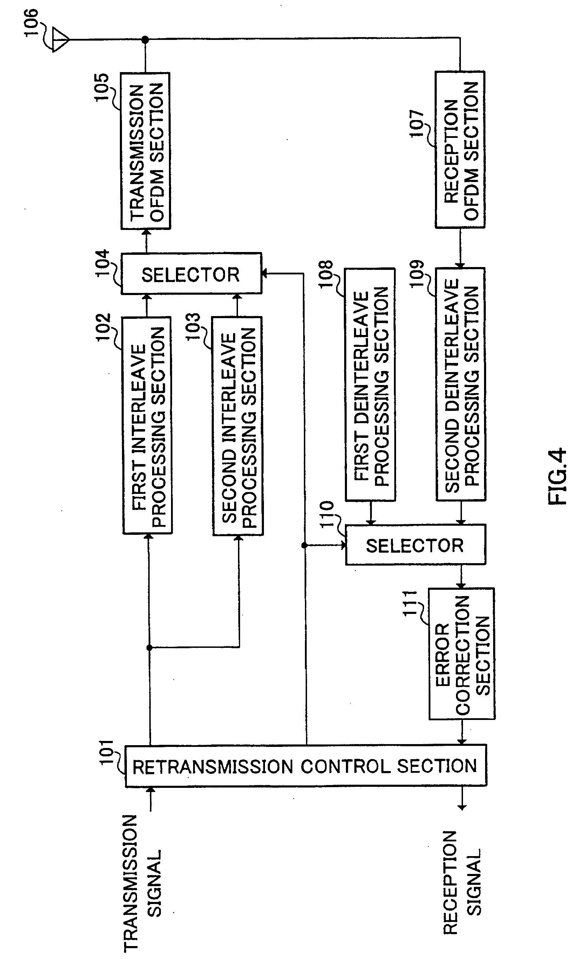

FIG.4 is a block diagram showing a configuration of an OFDM communication apparatus according to an embodiment of the present invention. Hereinafter, the OFDM communication apparatus according to this embodiment will be explained by taking a case where a first communication apparatus and second communication apparatus both equipped with this OFDM communication apparatus carry out a radio communication as an example. What will be explained here is a case where the first communication apparatus sends a signal to the second communication apparatus and when the signal that the second communication apparatus has received contains some error, the first communication apparatus retransmits (resends) this signal with an error to the second communication apparatus.

First, in the transmission system of the first communication apparatus, a transmission signal is stored in retransmission control section 101. This transmission signal is a packet-unit signal, for example. The stored transmission signal is sent by retransmission control section 101 to first interleave processing section 102 and second interleave processing section 103 according to a preset transmission timing.

First interleave processing section 102 performs interleave processing on the signal sent by retransmission control section 101. That is, the sequence of the signal sent by retransmission control section 101 is rearranged according to a specific rule. The signal with the rearranged sequence is output to selector 104.

Second interleave processing section 103 performs interleave processing on the signal sent by retransmission control section 101. That is, the sequence of the signal sent by retransmission control section 101 is rearranged according to a specific rule. However, the specific rule used by second interleave processing section 103 is different from the specific rule used by first interleave processing section 102. The signal with the sequence rearranged by second interleave processing section 103 is output to selector 104.

As the interleave method by first interleave processing section 102 and second interleave processing section 103, various kinds of interleave including chip interleave and symbol interleave can be used.

Under the control by retransmission control section 101, selector 104 outputs the interleaved signal output from either first interleave processing section 102 or second interleave processing section 103 to transmission OFDM section 105.

More specifically, a control signal is output from retransmission control section 101 to selector 104, which indicates which of the interleaved signal, from first interleave processing section 102 or from second interleave processing section 103, should be output to transmission OFDM section 105 depending on whether the packet sent by retransmission control section 101 is a signal which will be transmitted for the first time or a signal which will be retransmitted.

In this embodiment, it is assumed that when the packet sent by retransmission control section 101 is a signal which will be transmitted for the first time, selector 104 outputs the interleaved signal from first interleave processing section 102 to transmission OFDM section 105 and when the packet sent by retransmission control section 101 is a signal which will be retransmitted, selector 104 outputs the interleaved signal from second interleave processing section 103.

The signal from selector 104, that is, the signal interleaved by first interleave processing section 102 is subjected to predetermined transmission OFDM processing and assigned to subcarriers by transmission OFDM section 105. This transmission OFDM processing includes processing such as serial/parallel conversion, primary modulation (QPSK and 16QAM, etc.) and IFFT (Inverse Fourier Transform).

Here, the signal subjected to the predetermined transmission OFDM processing above refers to a signal assigned to each subcarrier at predetermined subcarrier intervals as a result of interleave processing by first interleave processing section 102. That is, regarding the signal subjected to the predetermined transmission OFDM processing above, the first to fourth transmission signals input to first interleave processing section 102 are placed at intervals of, for example, 4 subcarriers such as subcarrier 1, subcarrier 5 and subcarrier 9, and so on.

The signal subjected to the transmission OFDM processing is transmitted to the second communication apparatus via antenna 106. The signal sent from the first communication apparatus is received by the second communication apparatus through a transmission path.

The signal received through antenna 106 in the second communication apparatus is subjected to predetermined reception OFDM processing by reception OFDM section 107. This reception OFDM processing includes synchronization, FFT (Fourier Transform), transmission diversity, coherent detection (or delay detection) and parallel/serial conversion, etc. The signal subjected to the predetermined reception OFDM processing above is output to first deinterleave processing section 108 and second deinterleave processing section 109.

First deinterleave processing section 108 rearranges the sequence of the signal from reception OFDM section 107 according to a specific rule. This specific rule corresponds to the specific rule used by first interleave processing section 102 in the first communication apparatus. Through this rearrangement, the sequence of the signal from reception OFDM section 107 is rearranged to match the sequence when this signal is sent by retransmission control section 101 in the first communication apparatus. The signal deinterleaved by first deinterleave processing section 108 is output to selector 110.

Second deinterleave processing section 109 rearranges the sequence of the signal from reception OFDM section 107 according to a specific rule. This specific rule corresponds to the specific rule used by second interleave processing section 103 in the first communication apparatus. Through this rearrangement, the sequence of the signal from reception OFDM section 107 is rearranged to match the sequence when this signal is sent by retransmission control section 101 in the first communication apparatus. The signal deinterleaved by second deinterleave processing section 109 is output to selector 110.

Under the control by retransmission control section 101, selector 110 outputs the deinterleaved signal output from either first deinterleave processing section 108 or second deinterleave processing section 109 to error correction section 111.

More specifically, a control signal is output from retransmission control section 101 to selector 110, which indicates which of the deinterleaved signal, from first deinterleave processing section 108 or from second deinterleave processing section 109, should be output to error correction section 111 depending on what times the packet was received through antenna 106, that is, depending on whether the packet received through antenna 106 is a signal which was transmitted for the first time or a signal which was retransmitted by the first communication apparatus.

In this embodiment, it is assumed that when the packet received through antenna 106 is a signal which was transmitted by the first communication apparatus for the first time, selector 110 outputs the deinterleaved signal from first deinterleave processing section 108 to error correction section 111 and when the packet received through antenna 106 is a signal which was retransmitted by the first communication apparatus, selector 110 outputs the deinterleaved signal from second deinterleave processing section 109.

The signal from selector 110, that is, the signal deinterleaved by first deinterleave processing section 108 is subjected to error correction processing by error correction section 111 and output as a packet-unit signal to retransmission control section 101.

When the error-corrected packet-unit signal contains no error, retransmission control section 101 outputs this signal as a reception signal. On the contrary, when the error-corrected packet-unit signal contains some error, this packet-unit signal is stored in predetermined memory. Hereafter, a signal including a packet requesting retransmission of this packet-unit signal is processed by each section of the transmission system and then transmitted to the first communication apparatus through antenna 106.

Hereafter, in the first communication apparatus that has received the signal including the packet requesting retransmission above, retransmission control section 101 sends the packet-unit signal whose retransmission is requested by the second communication apparatus to first interleave processing section 102 and second interleave processing section 103 according to a retransmission timing. Furthermore, retransmission control section 101 outputs to selector 104 a control signal requesting that the interleaved signal from second interleave processing section 103 be output to transmission OFDM section 105.

According to the above control signal, selector 104 outputs the interleaved signal from second interleave processing section 103 to transmission OFDM section 105. That is, the packet-unit signal to be retransmitted is subjected to interleave processing different from the interleave processing when the signal is sent for the first time and output to transmission OFDM section 105. The signal from selector 104 is subjected to the aforementioned processing by transmission OFDM section 105 and transmitted to the second communication apparatus through antenna 106.

Here, the signal subjected to the transmission OFDM processing of the packet to be retransmitted refers to a signal assigned to each subcarrier at predetermined subcarrier intervals different from the ones in the first transmission as a result of interleave processing by second interleave processing section 103. That is, regarding the signal subjected to the transmission OFDM processing above, the first to fourth signals input to second interleave processing section 103 are placed at intervals of, for example, 2 subcarriers such as subcarrier 1, subcarrier 3 and subcarrier 5, and subcarrier 7, and so on. Because of this, each signal in the packet to be retransmitted is assigned to a subcarrier different from the one in the first transmission.

The second communication apparatus receives the signal including the retransmitted packet through antenna 106. The signal received through antenna 106 is subjected to the same processing as that described above by each of reception OFDM section 107, first deinterleave processing section 108 and second deinterleave processing section 109.

Retransmission control section 101 outputs to selector 110 a control signal requesting that the signal subjected to deinterleave processing from second deinterleave section 109 be output to error correction section 111.

According to the above control signal, selector 110 outputs the signal subjected to deinterleave processing from second deinterleave processing section 109 to error correction section 111. That is, the retransmitted packet-unit signal is subjected to deinterleave processing different from the deinterleave processing when the signal is sent for the first time and output to error correction section 111. The signal from selector 110 is subjected to error correction processing by error correction section 111 and output to retransmission control section 101.

Here, when interleaving processing differing between the first transmission and retransmission is applied to a specific packet in the first communication apparatus, how the signal including this retransmitted packet is received by the second communication apparatus will be explained with reference to FIG.2 again.

As shown in FIG.2, when a specific packet is received by the second communication apparatus for the first time, the signal output from reception OFDM section 107 is the signal picked up by each subcarrier in time series at intervals of 4 subcarriers such as subcarrier 1, subcarrier 5, subcarrier 9 and subcarrier 13, ···. As is apparent from FIG.2, since the signals assigned to subcarrier 1, subcarrier 5, subcarrier 9 and subcarrier 13, ··· have poor signal quality, the signals picked up in this way contain errors concentrated on a specific time period.

On the other hand, when the above specific packet is received by the second communication apparatus again, the signal output from reception OFDM section 107 is the signal picked up by each subcarrier in time series at intervals of 2 subcarriers such as subcarrier 1, subcarrier 3, subcarrier 5 and subcarrier 7, ···. Suppose, however, the channel state when the above specific packet is received by the second communication apparatus for the first time is virtually the same as the channel state when the above specific packet is received again.

As is apparent from FIG.2, the signals picked up in this way include signals of poor quality and signals of good quality inserted alternately, and therefore these are signals with a low probability that errors will be concentrated on a specific time period. That is, since signals in a specific packet of the first communication apparatus are transmitted after being assigned to subcarriers which differ when this specific packet is transmitted for the first time and when the packet is retransmitted, the quality of each signal in the above specific packet received by the second communication apparatus differs from one case to another. Here, since the channel states in the above cases are virtually the same, the probability that errors will be concentrated on a specific time period is low in the above specific packet received by the second communication apparatus.

Therefore, when there is almost no change in the channel state between the first transmission and retransmission of the specific packet by the first communication apparatus, the probability that errors will occur in the packet retransmitted to the second communication apparatus by the first communication apparatus is extremely low. That is, in the above case, it is possible to avoid cases where errors will occur consecutively in a specific packet.

This embodiment describes the case where two interleave processing sections and two deinterleave processing sections are provided, but the present invention is not limited to this and is also applicable to a case where more interleave processing sections and more deinterleave processing sections are provided. In this case, it is possible to use a plurality of interleave processing sections and deinterleave processing sections provided according to the number of retransmissions of the packet to be sent. This can reduce, with increased certainty, the probability that errors will occur consecutively in the same packet.

Furthermore, this embodiment describes the case where the first communication apparatus sends a signal to the second communication apparatus and when an error is found in the signal received by the second communication apparatus, this signal with the error is retransmitted (resent) from the first communication apparatus to the second communication apparatus. However, since both the first communication apparatus and the second communication apparatus have the configuration shown in FIG.4, the present invention is also applicable to a case where the second communication apparatus sends a signal to the first communication apparatus and when an error is found in the signal received by the first communication apparatus, this signal with the error is retransmitted (resent) from the second communication apparatus to the first communication apparatus.

As shown above, this embodiment provides a plurality of interleave processing sections that perform mutually different interleave and a plurality of deinterleave processing sections that perform mutually different deinterleave and uses the above plurality of interleave processing sections and deinterleave processing sections, that is changes the interleave method according to the number of retransmissions of a packet to be sent, thus making it possible to reduce the probability that errors will occur consecutively in the same packet. When an error occurs in a specific packet, this will shorten the time required until this specific packet is received without errors.

This embodiment describes the case where interleave processing is changed according to the number of retransmissions of a certain packet, but the present invention is not limited to this and is also applicable to a case where a plurality of interleave processing sections and deinterleave processing sections are used differently according to various conditions such as channel quality. This makes it possible to reduce the probability that errors will occur in the received packet.

The OFDM communication apparatus according to the embodiment of the present invention can be mounted on a communication terminal apparatus and base station apparatus in a digital mobile communication system.

As described above, the present invention applies interleave processing to a transmission signal according to the number of retransmissions of the transmission signal, making it possible to provide an OFDM communication apparatus capable of reducing the probability that errors will occur consecutively in a same packet.

This application is based on the Japanese Patent Application No.HEI 11-233909 filed on August 20, 1999, entire content of which is expressly incorporated by reference herein.

### Industrial Applicability

The present invention is ideally applicable to the field of an OFDM-based communication apparatus that carries out retransmission control.

## Claims

1. An OFDM transmission apparatus comprising:
a plurality of interleave means capable of executing mutually different interleave processing on a transmission signal;
selecting means for selecting an interleave means to execute interleave processing on said transmission signal from among said plurality of interleave means according to the number of retransmissions of said transmission signal; and
OFDM means for performing OFDM processing on the transmission signal interleaved by the selected interleave means.

2. An OFDM reception apparatus comprising:
receiving means for receiving a transmission signal performed interleave processing according to the number of retransmissions of the transmission signal by a communication apparatus and performing OFDM processing on the received transmission signal;
a plurality of deinterleave means capable of executing mutually different deinterleave processing on the received transmission signal subjected to the OFDM processing; and
selecting means for selecting the deinterleave means to execute deinterleave processing corresponding to said interleave processing from among said plurality of deinterleave processing means and allowing the selected interleave means to execute deinterleave processing on the received transmission signal subjected to the OFDM processing.

3. An OFDM communication apparatus equipped with an OFDM transmission apparatus and an OFDM reception apparatus, said OFDM transmission apparatus comprising:
a plurality of interleave means capable of executing mutually different interleave processing on a transmission signal;
selecting means for selecting an interleave means to execute interleave processing on said transmission signal from among said plurality of interleave means according to the number of retransmissions of said transmission signal; and
OFDM means for performing OFDM processing on the transmission signal interleaved by the selected interleave means; and
said OFDM reception apparatus comprising:
receiving means for receiving a transmission signal performed interleave processing according to the number of retransmissions of the transmission signal by the OFDM transmission apparatus and performing OFDM processing on the received transmission signal;
a plurality of deinterleave means capable of executing mutually different deinterleave processing on the received transmission signal subjected to the OFDM processing; and
selecting means for selecting the deinterleave means to execute deinterleave processing corresponding to said interleave processing from among said plurality of deinterleave processing means and allowing the selected interleave means to execute deinterleave processing on the received transmission signal subjected to the OFDM processing.

4. A communication terminal apparatus equipped with an OFDM communication apparatus, said OFDM communication apparatus comprising:
an OFDM transmission apparatus having:
a plurality of interleave means capable of executing mutually different interleave processing on a transmission signal;
selecting means for selecting an interleave means to execute interleave processing on said transmission signal from among said plurality of interleave means according to the number of retransmissions of said transmission signal; and
OFDM means for performing OFDM processing on the transmission signal interleaved by the selected interleave means
an OFDM reception apparatus having:
receiving means for receiving a transmission signal performed interleave processing according to the number of retransmissions of the transmission signal by the OFDM transmission apparatus and performing OFDM processing on the received transmission signal;
a plurality of deinterleave means capable of executing mutually different deinterleave processing on the received transmission signal subjected to the OFDM processing; and
selecting means for selecting the deinterleave means to execute deinterleave processing corresponding to said interleave processing from among said plurality of deinterleave processing means and allowing the selected interleave means to execute deinterleave processing on the received transmission signal subjected to the OFDM processing.

5. A base station apparatus equipped with an OFDM communication apparatus, said OFDM communication apparatus comprising:
an OFDM transmission apparatus having:
a plurality of interleave means capable of executing mutually different interleave processing on a transmission signal;
selecting means for selecting an interleave means to execute interleave processing on said transmission signal from among said plurality of interleave means according to the number of retransmissions of said transmission signal; and
OFDM means for performing OFDM processing on the transmission signal interleaved by the selected interleave means
an OFDM reception apparatus having:
receiving means for receiving a transmission signal performed interleave processing according to the number of retransmissions of the transmission signal by the OFDM transmission apparatus and performing OFDM processing on the received transmission signal;
a plurality of deinterleave means capable of executing mutually different deinterleave processing on the received transmission signal subjected to the OFDM processing; and
selecting means for selecting the deinterleave means to execute deinterleave processing corresponding to said interleave processing from among said plurality of deinterleave processing means and allowing the selected interleave means to execute deinterleave processing on the received transmission signal subjected to the OFDM processing.

6. An OFDM communication method comprising:
an interleave processing step of executing interleave processing corresponding to the number of retransmissions of a transmission signal from among a plurality of interleave processing on said transmission signal;
a transmitting step of performing OFDM processing on the transmission signal subjected to the interleave processing and transmitting the transmission signal subjected to the OFDM processing through a transmission path;
a receiving step of receiving said transmission signal transmitted through said transmission path and performing OFDM processing on the received signal; and
a deinterleave processing step of executing deinterleave processing corresponding to said executed interleave processing from among a plurality of deinterleave processing on the received signal subjected to the OFDM processing.
